# EUROPEAN PATENT APPLICATION

(11) **EP 4 645 452 A1**
(43) Date of publication of application: **05.11.2025**
(21) Application number: 23912654.3
(22) Date of filing: 07.12.2023
(51) Int. Cl.: H01M 4/36, H01M 4/525, H01M 4/505, C01G 53/00, H01M 10/052, H01M 4/02

(54) **ANODE ACTIVE MATERIAL FOR LITHIUM SECONDARY BATTERY, PREPARATION METHOD THEREFOR, AND LITHIUM SECONDARY BATTERY COMPRISING SAME**

(30) Priority: 26.12.2022 KR 20220184506
(71) Applicant: Research Institute of Industrial Science & Technology, Pohang-si, Gyeongsangbuk-do 37673 (KR); Posco Future M Co., Ltd., Pohang-si, Gyeongsangbuk-do 37918 (KR)
(72) Inventor: CHANG, Joon Ha, Incheon 21982 (KR); PARK, Jong Il, Pohang-si, Gyeongsangbuk-do 37680 (KR); KANG, Sung, Pohang-si, Gyeongsangbuk-do 37655 (KR); KIM, Junghoon, Incheon 22003 (KR); PARK, Inchul, Incheon 22008 (KR); YU, Byongyong, Incheon 22003 (KR); LEE, Jiho, Incheon 22008 (KR); KIM, Ju Seong, Seoul 07542 (KR); JUNG, Yongjo, Incheon 22002 (KR); NAM, Sang Cheol, Seoul 02587 (KR)
(74) Representative: Meissner Bolte Partnerschaft mbB
(86) International application number: PCT/KR2023/020114
(87) International publication number: WO 2024/143979

(57) **Abstract**

Disclosed is a positive electrode active material for a lithium secondary battery, a method for manufacturing the same, and a lithium secondary battery comprising the same. The positive electrode active material includes: a core comprising a lithium metal oxide; coating particles located on the core; and a diffusion coating layer located on the core, wherein the lithium metal oxide is in the form of a single particle, the diffusion coating layer is in the form of a film, and a ratio of a major axis to a minor axis of the coating particles is greater than 2.

## Description

### [Technical Field]

The present invention relates to a positive electrode active material for a lithium secondary battery, a method for manufacturing the same, and a lithium secondary battery including the same.

### [Background Art]

Due to global efforts to reduce CO₂ emissions, the demand for electric vehicles that do not emit CO₂ has increased, leading to rapid growth in the electric vehicle market. However, several challenges still hinder the widespread adoption of electric vehicles. The major issues include insufficient driving range per charge, short lifespan, and high cost. These limitations result in problems with the energy density and reliability of batteries.

Ni-rich layered Li[Ni₁-ₓ-_{γ}CoₓMn_{γ}]O₂ positive electrode active materials are considered promising candidates to power next-generation electric vehicles. Increasing the Ni content is a primary approach to enhancing energy density. However, Ni-rich layered positive electrode active materials suffer from a cation mixing issue, in which Ni atoms are incorporated into Li sites. Furthermore, there are concerns related to the formation of microcracks due to weakened particle strength, which leads to an increase in specific surface area and, consequently, more side reactions with the electrolyte.

To address these issues, single-particle positive electrode active materials, which minimize interparticle boundaries by eliminating the polycrystalline secondary particle structure typically formed by aggregated primary particles, have emerged as a strategic alternative. Single-particle active materials exhibit a smaller specific surface area than multi-particle active materials, thereby suppressing side reactions with the electrolyte. However, since their particle growth involves relatively high temperatures, cation-mixed layers tend to form on the surface, resulting in increased initial resistance and degraded cycle performance.

### [Detailed Description of the Invention]

### [Technical Problem]

To address these limitations, surface coating is to be introduced. The effect of the surface coating may vary depending on the elements of the coating and the morphology of the coating layer. In one embodiment of the present disclosure, a coating layer is introduced to improve the initial resistance and cycle performance of single-particle active materials.

### [Technical Solution]

According to one embodiment of the present invention, a positive electrode active material for a lithium secondary battery is provided, comprising: a core including a lithium metal oxide; coating particles disposed on the core; and a diffusion coating layer disposed on the core, wherein the lithium metal oxide is in a single-particle form, the diffusion coating layer is in a film form, and the ratio of the major axis to the minor axis of the coating particles is greater than 2.

The diffusion coating layer may be located on a surface of the core except for the surface in contact with the coating particles.

The major axis of the coating particles may range from 100 nm to 250 nm.

The major axis of the coating particles may range from 200 nm to 250 nm.

The thickness of the diffusion coating layer may range from 2 nm to 10 nm.

The coating particles may include cobalt.

The diffusion coating layer may include cobalt.

The lithium metal oxide may include nickel, and the content of Ni may range from 85 mol% to 95 mol% based on the total metal content of 100 mol%.

Based on a total of 100 mol% of the lithium metal oxide, the coating particles, and the diffusion coating layer, the sum of the coating particles and the diffusion coating layer may be 5 mol% or less.

In another embodiment of the present invention, a method for manufacturing a positive electrode active material for a lithium secondary battery is provided, comprising: preparing a lithium metal oxide; dry-mixing metal hydroxide particles and the lithium metal oxide, followed by heat treatment; and obtaining a positive electrode active material for a lithium secondary battery comprising: a core including the lithium metal oxide; coating particles disposed on the core; and a diffusion coating layer disposed on the core, wherein the lithium metal oxide is in a single-particle form, the diffusion coating layer is in a film form, and the ratio of the major axis to the minor axis of the coating particles is greater than 2.

The metal hydroxide particles may include cobalt hydroxide.

The step of dry-mixing the metal hydroxide particles and the lithium metal oxide, followed by heat treatment, may be carried out at a temperature ranging from 600°C to 700°C.

The step of dry-mixing the metal hydroxide particles and the lithium metal oxide, followed by heat treatment, may be carried out for 3 hours to 7 hours.

In the step of dry-mixing the metal hydroxide particles and the lithium metal oxide, followed by heat treatment, the content of the metal hydroxide particles may be 5 mol% or less based on the total of 100 mol% of the metal hydroxide particles and the lithium metal oxide.

In another embodiment of the present invention, a lithium secondary battery is provided, comprising: a positive electrode, a negative electrode, and a separator interposed therebetween, wherein the positive electrode includes a positive electrode current collector and a positive electrode active material layer disposed on the positive electrode current collector, and the positive electrode active material layer includes the positive electrode active material according to any of the aforementioned embodiments of the present invention.

### [Effect of the Invention]

According to one embodiment of the present disclosure, a positive electrode active material for a lithium secondary battery with improved resistance characteristics and cycle performance can be provided.

### [Brief Description of Drawings]

FIG. 1 is a conceptual diagram of the structure of a positive electrode active material according to one embodiment of the present disclosure.
FIG. 2 is an SEM image of the positive electrode active material according to one embodiment of the present disclosure.

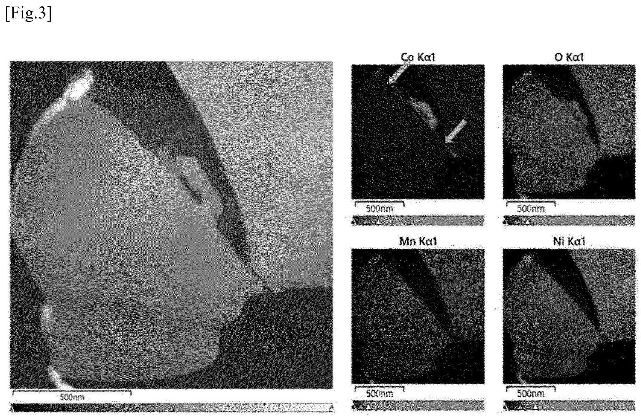

FIG. 3 is EDS mapping data of the positive electrode active material according to one embodiment of the present disclosure.

### [Mode for the Invention]

Hereinafter, embodiments of the present invention will be described in detail. However, the following description is provided merely as examples, and the present invention is not limited thereto but is defined only by the scope of the claims set forth below.

One embodiment of the present disclosure relates to a coating technology for improving the initial resistance and cycle life during the fabrication of single particles, aimed at resolving gas generation and poor cycle life-issues commonly associated with high-Ni NCM-based active materials. By controlling the morphology of the coating particles and the diffusion coating layer present on the surface of the active material, the aforementioned effects can be achieved.

More specifically, one embodiment of the present disclosure pertains to the coating particles and diffusion coating layer formed on a single particle consisting of only one primary particle.

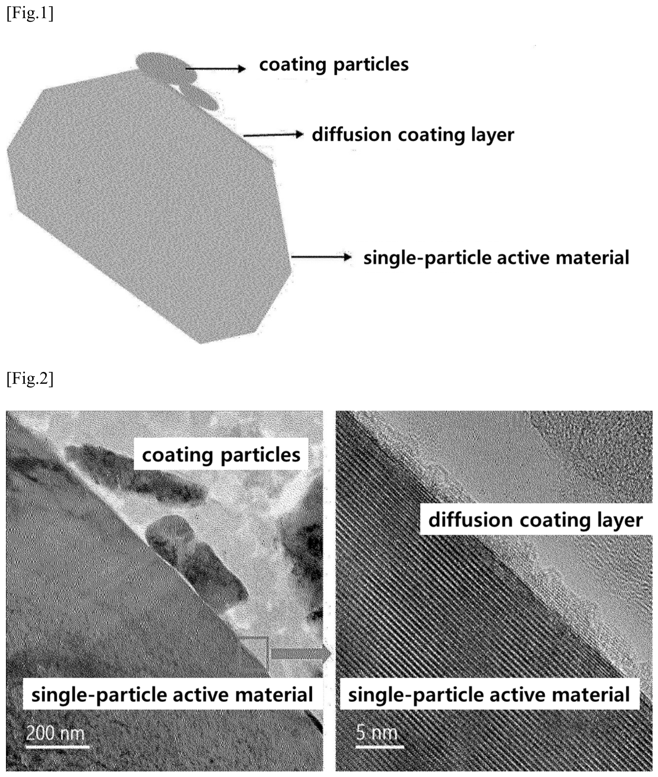

As illustrated in FIG. 1, the active material of the present disclosure may include coating particles and a diffusion coating layer.

Various properties can be controlled depending on the size and aspect ratio of the coating particles. Additionally, various properties can also be controlled depending on the thickness of the diffusion coating layer.

Hereinafter, preferred examples and comparative examples of the present invention will be described. However, the following examples merely illustrate preferred embodiments of the present invention and are not intended to limit the scope of the invention.

### Examples and Comparative Examples

### 1. Composition

Li[Ni₁-ₓ-_{γ}CoₓMn_{γ}]O₂ (where 0.05 ≤ x + y ≤ 0.15)

### 2. Manufacturing Process

A composite metal hydroxide, [Ni_{1-x-y}CoₓMn_{y}](OH)₂ (where 0.05 ≤ x + y ≤ 0.15), was mixed with lithium hydroxide (LiOH) at a molar ratio of 1:1.03 and subjected to calcination in an oxygen atmosphere for 10 hours within various temperature ranges to synthesize a layered nickel-based active material of the formula Li[Ni₁-ₓ-_{γ}CoₓMn_{γ}]O₂ (where 0.05 ≤ x + y ≤ 0.15).

The layered nickel-based active material, Li[Ni₁-ₓ-_{γ}CoₓMn_{γ}]O₂ (where 0.05 ≤ x + y ≤ 0.15), was dry-mixed with cobalt hydroxide (Co(OH)₂), and the mixture was calcined at 700°C for 5 hours to obtain a composite cathode active material having coating particles and a diffusion coating layer containing lithium cobalt oxide. The content of Co(OH)₂ was set to 3.5 mol% or less based on the total of 100 mol% of the nickel-based active material and Co(OH)₂.

**[Table 1]**

| Example Type | Diffusion Coating Layer Thickness (nm) | Coating Particle Size (nm) | Aspect Ratio of Coating Particles | Discharge Capacity (mAh/g) | Initial Resistance (Ω) | High-Temperature Cycle Retention at 50 Cycles (%) |
|---|---|---|---|---|---|---|
| Example 1 | 5 | 200 | 2.5 | 209.2 | 14.95 | 93.2 |
| Comparative Example 1 | 12 | 50 | 1.5 | 201.2 | 17.88 | 91.5 |
| Comparative Example 2 | 0 | 175 | 2 | 200.5 | 19.97 | 90.1 |
| Comparative Example 3 | 5 | 50 | 1.3 | 204.5 | 17.05 | 91.3 |

The present invention is not limited to the above-described examples and may be implemented in various different forms. It will be understood by those skilled in the art to which the present invention pertains that the invention may be practiced in other specific forms without altering the technical spirit or essential characteristics of the invention. Therefore, it should be understood that the embodiments described above are illustrative in all respects and not restrictive.

## Claims

1. A positive electrode active material for a lithium secondary battery, comprising:
a core comprising a lithium metal oxide;
coating particles located on the core; and
a diffusion coating layer located on the core,
wherein the lithium metal oxide is in the form of a single particle,
wherein the diffusion coating layer is in the form of a film, and
wherein a ratio of a major axis to a minor axis of the coating particles is greater than 2.

2. The positive electrode active material of claim 1,
wherein the diffusion coating layer is located on a surface of the core excluding a surface in contact with the coating particles.

3. The positive electrode active material of claim 1,
wherein the major axis of the coating particles is from 100 nm to 250 nm.

4. The positive electrode active material of claim 1,
wherein the major axis of the coating particles is from 200 nm to 250 nm.

5. The positive electrode active material of claim 1,
wherein a thickness of the diffusion coating layer is from 2 nm to 10 nm.

6. The positive electrode active material of claim 1,
wherein the coating particles comprise cobalt.

7. The positive electrode active material of claim 6,
wherein the diffusion coating layer comprises cobalt.

8. The positive electrode active material of claim 1,
wherein the lithium metal oxide comprises nickel, and a content of Ni is in a range from 85 mol% to 95 mol% based on a total of 100 mol% of metals excluding lithium.

9. The positive electrode active material of claim 1,
wherein a total content of the coating particles and the diffusion coating layer is 5 mol% or less based on 100 mol% of the lithium metal oxide, the coating particles, and the diffusion coating layer.

10. A method for manufacturing a positive electrode active material for a lithium secondary battery, comprising:
preparing a lithium metal oxide;
dry-mixing metal hydroxide particles with the lithium metal oxide and performing a calcination; and
obtaining a positive electrode active material for a lithium secondary battery comprising:
a core comprising the lithium metal oxide;
coating particles located on the core; and
a diffusion coating layer located on the core,
wherein the lithium metal oxide is in the form of a single particle,
wherein the diffusion coating layer is in the form of a film, and
wherein a ratio of a major axis to a minor axis of the coating particles is greater than 2.

11. The method of claim 10,
wherein the metal hydroxide particles comprise cobalt hydroxide.

12. The method of claim 10,
wherein the calcination is performed at a temperature in a range from 600°C to 700°C.

13. The method of claim 10,
wherein the calcination is performed for a time period of 3 to 7 hours.

14. The method of claim 10,
wherein a content of the metal hydroxide particles is 5 mol% or less based on 100 mol% of the metal hydroxide particles and the lithium metal oxide.

15. A lithium secondary battery, comprising:
a positive electrode;
a negative electrode; and
a separator positioned between the positive electrode and the negative electrode,
wherein the positive electrode comprises a positive electrode current collector and a positive electrode active material layer located on the positive electrode current collector,
wherein the positive electrode active material layer comprises the positive electrode active material of claim 1.
